# EUROPÄISCHE PATENTSCHRIFT

(11) **EP 1 054 469 B1**
(45) Veröffentlichungstag und Bekanntmachung des Hinweises auf die Patenterteilung: **16.10.2002**
(21) Anmeldenummer: 00110492.6
(22) Anmeldetag: 17.05.2000
(51) Int. Cl.: H01Q 17/00, H05B 6/64, B29C 65/00, B29C 65/20

(54) **Vorrichtung und Verfahren zum Erwärmen von Bauteilen aus mikrowellenabsorbierendem Kunststoff**
Device and method for heating of components made of microwaves absorbing synthetic material
Dispositif et procédé de chauffage de composants synthétiques absorbants en micro-ondes

(30) Priorität: 19.05.1999 DE 19922930; 12.08.1999 DE 19937359
(43) Veröffentlichungstag der Anmeldung: 22.11.2000
(73) Patentinhaber: FRAUNHOFER-GESELLSCHAFT ZUR FÖRDERUNG DER ANGEWANDTEN FORSCHUNG E.V., 80636 München (DE); Mügge Electronic GmbH, 64385 Reichelsheim (DE); Dommer, Armin, D-71254 Ditzingen (DE)
(72) Erfinder: Emmerich, Rudolf, Dr., 76648 Durmersheim (DE); Mügge, Horst, 84385 Reichelsheim (DE); Dommer, Armin, 71254 Ditzingen (DE); Jauss, Michael, 72116 Mössingen (DE)

(56) Entgegenhaltungen:
- EP-A- 0 991 136
- GB-A- 2 240 980
- US-A- 4 088 863
- US-A- 4 339 295
- US-A- 5 254 824
- PATENT ABSTRACTS OF JAPAN vol. 1996, no. 03, 29. März 1996 (1996-03-29) -& JP 07 310887 A (SEKISUI CHEM CO LTD), 28. November 1995 (1995-11-28)

## Beschreibung

Die vorliegende Erfindung betrifft eine Vorrichtung und ein Verfahren zum Erwärmen von Bauteilen aus mikrowellenabsorbierendem Kunststoff, mit einem Mikrowellengenerator, der Mikrowellen einer bestimmten Frequenz erzeugt, mit einer Antenne, die wenigstens ein freies Ende aufweist zu der die Mikrowellen geleitet werden, mit einer die Antenne umgebenden Einrichtung zur Abschirmung, wobei zwischen dem freien Ende der Antenne und der Einrichtung zur Abschirmung eine Erwärmungszone vorgesehen ist, in welcher die Bauteile räumlich begrenzt erwärmbar sind, und mit wenigstens einem Temperatursensor, durch welchen die Temperatur des Bauteils während der Erwärmung erfaßbar ist.

Bei den bisher üblichen Erwärmungsmethoden werden die Bauteile mittels eines Heizspiegels oder eines Infrarotstrahlers erwärmt. Solche Heizspiegel oder Infrarotstrahler stellen für Temperatursensoren jedoch eine Störquelle dar, durch welche das Meßergebnis deutlich verfälscht wird. Daher wird die Qualität der Bauteile nicht direkt über die Prozeßparameter, sondern nur indirekt mittels zerstörungsfreier oder sogar formteilzerstörender Prüfmethoden bestimmt. Diese aufwendigen Prüfmethoden werden beispielsweise beim Verschweißen von rohrförmigen Bauteilen herangezogen, um in Abhängigkeit von Material, Durchmesser und Wandstärke der Bauteile die Prozeßpara-meter Heizleistung und Heizdauer festzulegen. Durch die indirekte Bestimmung der Prozeßparameter wird aber eine systematische Optimierung des Schweißprozesses erschwert, da material- und applikationsspezifische Anforderungen hierbei nicht oder nur unzurei-chend berücksichtigt werden können.

Aus den Druckschriften JP 07 310 887 A, US 5,254,824 und US 4,339,295 ist der Einsatz von Mikrowellen bekannt, um miteinander zu verbindende Bauteile, die selbst nicht mikrowellenabsorbierend sind, im Bereich von speziellen Verbindungsschichten aus mikrowellenabsorbierendem Material zu erwärmen und auf diese Weise miteinander zu verbinden.

Eine verbesserte Erwärmungsmethode, bei der die Bauteile mittels Mikrowellen erwärmt werden, ist in der nicht vorveröffentlichten Patentanmeldung DE 198 44 549 bzw. EP 0 991 136 A1 mit dem Titel "Vorrichtung und Verfahren zum Erwärmen von Bauteilen aus mikrowellenabsorbierendem Kunststoff" beschrieben.Diese Vorrichtung beziehungsweise dieses Verfahren hat den großen Vorteil, daß es damit erstmals möglich ist, Bauteile ohne spezielle mikrowellenabsorbierende Bereiche räumlich begrenzt - also genau definiert - zu erwärmen. Dies eröffnet beim Verschweißen, Verformen und Vemetzen eine ganze Reihe besonders effizienter und daher schneller Bearbeitungsmöglichkeiten.

Eine Temperaturerfassung während der Erwärmung der Bauteile ist bei den vorstehend genannten Druckschriften allerdings nicht vorgesehen.

Aus der gattungsbildenden Druckschrift GB 2 240 980 A ist ein Verfahren zum Herstellen von Verbindungen bei Gummiteilen bekannt. Darin ist der Hinweis enthalten, daß es während der Vulkanisation der Gummiteile vorteilhaft ist, die Temperatur zu überwachen und das Mikrowellengerät in Abhängigkeit von der Temperatur zu steuern. Wie dies jedoch konkret aussehen könnte ist nicht geoffenbart.

Schließlich ist in der Druckschrift US 4,088,863 ein schnurloser Temperatursensor zur Überwachung der Temperatur von einer in einem Mikrowellengerät zu erwärmenden Substanz beschrieben. Dieser Temperatursensor weist einen Kolben mit einem ionisierbaren Gas auf, welches aufleuchtet, wenn es mit Mikrowellen beaufschlagt wird, und weist einen Bimetallstreifen auf, der sich in Abhängigkeit von der Temperatur verformt. Zur Temperaturüberwachung ist der Bimetallstreifen mit seinem einen Ende in eine Meßspitze integriert, welche in die zu erwärmende Substanz eingesteckt wird, und steuert mit seinem anderen Ende eine Blende für den Kolben, so daß der leuchtende Kolben dann, wenn die Substanz eine vorgegebene Temperatur erreicht hat, mittels der Blende abgedeckt wird.

Ausgehend von diesem Stand der Technik ist es Aufgabe der vorliegenden Erfindung eine weiter verbesserte Vorrichtung sowie ein weiter verbessertes Verfahren zum Erwärmen von Bauteilen aus mikrowellenabsorbierendem Kunststoff zu konzipieren, wobei während der Erwärmung der Bauteile im Bereich der Erwärmungszone eine möglichst genaue Temperaturerfassung erreicht werden soll, um eine gleichbleibend hohe Qualität der Bauteile zu gewährleisten.

Vorrichtungsgemäß wird diese Aufgabe durch eine Vorrichtung mit den Merkmalen des Anspruchs 1 gelöst. Indem bei dieser Vorrichtung der Temperatursensor im Bereich der Erwärmungszone an der Einrichtung zur Abschirmung vorgesehen ist, bezüglich der Mikrowellen wechselwirkungsfrei ist und die Temperatur des Bauteils kontaktlos erfaßt, und indem der Brennpunkt seiner Meßoptik auf einen in der Erwärmungszone liegenden Meßpunkt an der Oberfläche des Bauteils gerichtet ist, findet eine kontinuierliche Überwachung der Temperatur statt, was eine gleichbleibend hohe Qualität der erwärmten Bauteile gewährleistet. Dabei spielt es eine bedeutende Rolle, daß bei dieser Vorrichtung zum Erwärmen von Bauteilen der Mikrowellengenerator keine Störquelle für den Temperatursensor darstellt, so daß weder das Mikrowellenfeld noch das von dem Temperatursensor aufgenommene und übertragene Signal gestört werden. Außerdem ist dabei wichtig, daß auch das Mikrowelleneinkoppelsystem keine Störquelle für den Temperatursen-sor darstellt, da es sich selbst nicht erwärmt, so daß der Temperatursensor auch in dieser Hinsicht nicht beeinträchtigt wird.

Selbstverständlich kann die erfindungsgemäße Vorrichtung in Abhängigkeit von der Form und der Größe der Erwärmungszone auch mehrere Temperatursensoren aufweisen, um eine besonders aussagekräftige Temperaturüberwachung der Bauteile zu verwirklichen.
In einer bevorzugten Ausführungsform der Erfindung ist der wenigstens eine bezüglich der Mikrowellen wechselwirkungsfreie Temperatursensor ein Infrarotsensor. Infrarotsenoren können die Temperatur der Bauteile kontaktlos erfassen, da ihre Meßoptik die in ihrem Brennpunkt herrschende Temperatur bestimmen kann. Daher bietet sich die Verwendung von Infrarotsensoren besonders für geringfügig zu der Einrichtung zur Abschirmung beabstandete und einfach zugängliche Meßpunkte auf der Bauteiloberfläche an. Ganz abgesehen davon sind Infrarotsensoren auch bestens erprobt und kostengünstig erhältlich.

In einer anderen bevorzugten Ausführungsform der Erfindung ist der wenigstens eine bezüglich der Mikrowellen wechselwirkungsfreie Temperatursensor ein glasfaseroptischer Sensor. Solche glasfaseroptischen Sensoren sind für Mikrowellen völlig transparent und können Temperaturen ebenfalls kontaktlos erfassen. Sie bieten sich besonders dazu an, um die Temperatur der Bauteiloberfläche an von der Einrichtung zur Abschirmung weit beabstandeten und/oder schwer zugänglichen Meßpunkten in dem von den Mikrowellen durchdrunge-nen Bereich der Vorrichtung zu bestimmen.

Natürlich können als Temperatursensoren gleichzeitig sowohl Infrarotsensoren als auch glasfaseroptische Sensoren verwendet werden, da sich diese Sensoren je nach Geometrie der zu erwärmen-den Bauteile hervorragend ergänzen. Dies ist zum Beispiel bei rohrförmigen Bauteilen, die in einem räumlich begrenzten Bereich bis zur plastischen Verformungstemperatur erwärmt und dann verformt beziehungsweise verbogen werden, der Fall. Denn dabei soll die Temperatur am äußeren Radius sowie am inneren Radius der Erwärmungszone des rohrförmigen Bauteils überwacht werden. Hierzu wird die Temperatur am äußeren Radius bevorzugt durch einen Infrarotsensor und die Temperatur am inneren Radius bevorzugt durch einen glasfaseroptischen Sensor überwacht.

Der Temperatursensor sollte im wesentlichen an der Außenseite der Wandung der Einrichtung zur Abschirmung angeordnet sein. Somit ist der Temperatursensor weitgehend außerhalb der Einrichtung zur Abschirmung angeordnet und ragt nicht in den von den Mikrowellen durchdrungenen Bereich der Vorrichtung hinein. Dies erleichtert die praktische Umsetzung des Merkmals, daß der Temperatursensor bezüglich der Mikrowellen wechselwirkungsfrei sein muß.

Ist in der Wandung der Einrichtung zur Abschirmung eine Aufnahmeöffnung für die Meßoptik des Temperatursensors vorgesehen, so kann diese Aufnahmeöffnung für die Meßoptik des Temperatursensors von der Außenseite zur Innenseite der Wandung der Einrichtung zur Abschirmung hin konisch verlaufend ausgebildet sein. Dadurch kann verhindert werden, daß zwischen der Wandung der Einrichtung zur Abschirmung und dem Temperatursensor ein Spalt entsteht, durch den hindurch die Mikrowellen unkontrolliert austreten könnten. Außerdem erlaubt die konisch ausgebildete Aufnahmeöffnung eine sehr genaue Positionierung des Temperatursensors, was in Bezug auf eine exakte Justierung des Brennpunktes der Meßoptik auf einem Meßpunkt der Bauteiloberfläche von großer Bedeutung ist. Denn nur wenn der Brennpunkt der Meßoptik exakt auf der Bauteiloberfläche justiert ist, ist eine optimale Temperaturmessung möglich.

Die Aufnahmeöffnung für die Meßoptik des Temperatursensors kann aber auch auf andere Weise gegen den Austritt von Mikrowellen aus der Vorrichtung gesichert sein, indem im Bereich der Aufnahmeöffnung Absorberzonen vorgesehen sind.

Gemäß einer besonderen Weiterbildung der Erfindung sind der Temperatursensor und die Steuereinrichtung des Mikrowellengenera-tors über wenigstens eine Signalleitung miteinander verbunden. Dadurch kann nicht nur eine Überwachung der Temperatur des Bauteils sondern auch eine Steuerung des Mikrowellengenerators in Abhängigkeit von der Temperatur des Bauteils erfolgen, so daß auch Schwankungen der Materialzusammensetzung der Bauteile kompensierbar sind.

In der Steuereinrichtung des Mikrowellengenerators kann ein Kennfeld mit von dem Signal des Temperatursensors abhängigen Steuerparametern abgelegt sein, so daß die von dem Temperatursensor erfaßte Temperatur des Bauteils zur kennfeldabhängigen Steuerung des Mikrowellengenerators verwendet wird.

Verfahrensgemäß wird die Aufgabe durch ein Verfahren mit den Merkmalen des Anspruchs 11 gelöst. Indem die Temperatur des Bauteils während der Erwärmung unter Verwendung von wenigstens einem Temperatursensor erfolgt, der im Bereich der Erwärmungszone an der Einrichtung zur Abschirmung vorgesehen ist, bezüglich der Mikrowellen wechselwirkungsfrei ist und die Temperatur kontaktlos erfaßt, kann sogar innerhalb von eng vorgegebenen Toleranzen eine bestimmte Temperatur eingehalten und dokumentiert werden, so daß stets eine gleichbleibende Qualität der Bauteile sichergestellt ist. Zudem ist somit ein effektiver Einsatz der Mikrowellenenergie gegeben.

Bevorzugt wird der Mikrowellengenerator dabei in Abhängigkeit von dem von dem Temperatursensor erfaßten Signal gesteuert. Dadurch werden auch andere Einflüsse, die das Ergebnis beim Verschweißen, Verformen oder Vemetzen der Bauteile beeinträchtigen könnten, kompensiert.

Besonders bevorzugt wird der Mikrowellengenerator dabei so gesteuert, daß die Temperatur der Bauteile in der Erwärmungszone einem vorgegebenen Temperaturverlauf folgt. Auf diese Weise kann die Mikrowellenenergie, noch effektiver eingesetzt werden.

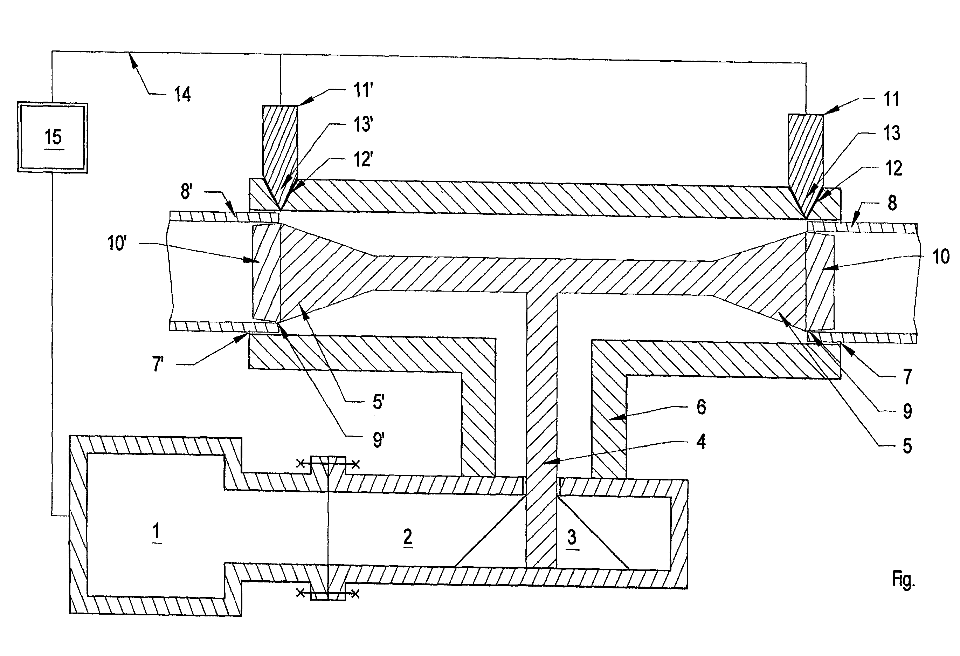

Die vorliegende Erfindung wird unter Bezugnahme auf die nachfolgende Zeichnungsfigur näher erläutert. Die Figur zeigt eine Vorrichtung zum Erwärmen von Bauteilen aus mikrowellenabsorbierendem Kunststoff mit zwei bezüglich der Mikrowellen wechselwirkungsfreien Temperatursensoren, in vereinfachter, nicht maßstabsgetreuer Darstellung.

Die Vorrichtung weist einen Mikrowellengenerator 1 auf, der Mikrowellen einer Frequenz von 2,45 GHz beziehungsweise einer Wellenlänge von ca. 120 mm erzeugt. Vom Mikrowellengenerator 1 gelangen die Mikrowellen über einen rechteckigen Hohlleiter 2 zu einer Einrichtung zur Einkopplung 3 und über die Einrichtung zur Einkopplung 3 schließlich zu einer Antenne 4 mit wenigstens einem freien Ende 5, 5', wo sie ausgekoppelt werden. Damit die Antenne 4 keine Mikrowellen in den freien Raum abstrahlen kann, ist eine aus Metall bestehende rohrförmige Einrichtung zur Abschirmung 6 vorgesehen. Die Einrichtung zur Abschirmung 6 hat einen Innendurchmesser von ca. 40 mm - also kleiner als die Hälfte der Wellenlänge - und ragt um mindestens 30 mm - also ein Viertel der Wellenlänge - über das wenigstens eine freie Ende 5, 5' der Antenne 4 hinaus. Die rohrförmige Einrichtung zur Abschirmung 6 weist außerdem wenigstens eine endständige Öffnung 7, 7' auf. Durch diese Öffnung 7, 7' können zu erwärmende Bauteile 8, 8' aus mikrowellenabsorbierendem Kunststoff, wie zum Beispiel Polyamid, Polyvinylchlorid oder Polyvinylidenfluorid, in die Erwärmungszone 9, 9' zwischen dem freien Ende 5, 5' der Antenne 4 und der Einrichtung zur Abschirmung 6 eingeführt werden. Die Erwärmungszone 9, 9' ist dabei in Abhängigkeit von der Größe der zu erwärmenden Bauteile 8, 8' dimensioniert.

Die gezeigte Vorrichtung ist insbesondere zum miteinander Verschweißen von zwei rohrförmigen Bauteilen 8, 8' geeignet. Dazu ist die Antenne 4 koaxial in der rohrförmigen Einrichtung zur Abschirmung 6 angeordnet und weist zwei sich kegelförmig aufweitende freie Enden 5, 5' auf. Die beiden Erwärmungszonen 9, 9' zwischen den freien Enden 5, 5' der Antenne 4 und der Einrichtung zur Abschirmung 6 sind in einem ringförmigen Bereich jeweils besonders schmal, damit in diesen ringförmigen Bereichen besonders hohe elektromagnetische Feldstär-ken erzeugt werden und eine besonders starke Erwärmung der Bauteile 8, 8' stattfindet. Die Abschnitte der Bauteile 8, 8', die außer-halb der Erwärmungszone 9, 9' liegen, werden hingegen nicht erwärmt. Darüber hinaus wird auch die Einrichtung zur Einkopplung 3 der Mikrowellen sowie die Antenne 4 und die Einrichtung zur Abschirmung 6 nicht erwärmt.

Nachdem die rohrförmigen Bauteile 8, 8' an ihrer Stimseite bis über die Schmelztemperatur erwärmt sind, werden die Bauteile 8, 8' aus der Vorrichtung herausgenommen und an ihren aufgeschmolzenen Stirnseiten durch Zusammenpressen miteinander verschweißt. Damit die rohrförmigen Bauteile 8, 8' in der Vorrichtung optimal positionierbar sind, ist an den freien Enden 5, 5' der Antenne 4 jeweils ein konisch ausgebildetes Dielektrikum 10, 10' vorgesehen, das auf die Abmessungen der zu erwärmenden rohrförmigen Bauteile 8, 8' abgestimmt ist. Dabei dienen die Dielektrika 10, 10' außerdem zur Kühlung der Innenseiten der rohrförmigen Bauteile 8, 8', um beim Verschweißen einen nach innen gerichteten Schweißwulst zu verhindern.

Damit bei den miteinander verschweißten Bauteilen 8, 8' eine gleichbleibende Qualität der Schweißnähte gewährleistet werden kann, wird die Temperatur der Bauteile 8, 8' in den Erwärmungszonen 9, 9' mittels zweier Temperatursensoren 11, 11' erfaßt. Diese beiden Temperatursensoren 11, 11' sind im dargestellten Ausführungsbeispiel Infrarotsensoren. Die Temperatursensoren 11, 11' sind im wesentlichen auf der Außenseite der Wandung der Einrichtung zur Abschirmung 6 angeordnet und mit der Spitze ihrer Meßoptik 13 jeweils in eine Aufnahmeöffnung 12, 12' in der Wandung der Einrichtung zur Abschirmung 6 eingesetzt. Die Aufnahmeöffnungen 12, 12' für die Meßoptik 13 der beiden Temperatursensoren 11, 11' sind von der Außenseite zu der Innenseite der Wandung hin sich konisch verjün-gend ausgebildet und korrespondieren mit der sich in gleichem Maße konisch verjüngenden Meßoptik 13 der beiden Temperatursensoren 11, 11', wobei die Spitze der Meßoptik 13 etwa bündig mit der Innenseite der Wandung der Einrichtung zur Abschirmung 6 abschließt - also kaum in die von den Mikrowellen druchdrungene Erwärmungszonen 9, 9' Vorrichtung hineinragt. Die konisch ausgebildeten Aufnahmeöffnungen 12, 12' sind an der Außenseite der Wandung so groß, daß die Meßoptik 13 einfach positionierbar ist und sind an der Innenseite der Wandung so klein, daß hierdurch keine Beeinträchtigung der innerhalb der Erwärmungszonen 9, 9' herrschenden Mikrowellenfelder auftritt. Die Spitze der Meßoptik 13 der beiden Temperatursensoren 11, 11' ist von den Meßpunkten auf der Bauteiloberfläche so weit entfernt, daß die Brennweite der Meßoptik 13 dieser Entfernung entspricht. Beim dargestellten Ausführungsbeispiel beträgt die Brennweite der Meßoptik 13 bzw. die Entfemung ca. 2 mm.

Die gezeigte Vorrichtung zum Erwärmen von Bauteilen 8, 8' weist zwischen den Temperatursensoren 11, 11' und der Steuereinrichtung 15 des Mikrowellengenerators 1 zudem eine Signalleitung 14 auf. Damit ist nicht nur eine Überwachung der Temperatur in der Erwär-mungszone 9, 9' der Bauteile 8, 8' sondern auch eine Steuerung des Mikrowellengenerators 1 in Abhängigkeit von der Temperatur in der Erwärmungszone 9, 9' der Bauteile 8, 8' realisiert.

## Patentansprüche

1. Vorrichtung zum Erwärmen von Bauteilen (8, 8') aus mikrowellenabsorbierendem Kunststoff, mit
- einem Mikrowellengenerator (1), der Mikrowellen einer bestimmten Frequenz erzeugt,
- einer Antenne (4), die wenigstens ein freies Ende (5, 5') aufweist, zu dem die Mikrowellen geleitet werden,
- einer die Antenne (4) umgebenden Einrichtung zur Abschirmung (6), wobei zwischen dem freien Ende (5, 5') der Antenne (4) und der Einrichtung zur Abschirmung (6) eine Erwärmungszone (9, 9') vorgesehen ist, in welcher die Bauteile (8, 8') räumlich begrenzt erwärmbar sind, und
- wenigstens einem Temperatursensor (11, 11'), durch welchen die Temperatur des Bauteils (8, 8') während der Erwärmung erfaßbar ist,
**dadurch gekennzeichnet, daß** der Temperatursensor (11, 11') im Bereich der Erwärmungszone (9, 9') an der Einrichtung zur Abschirmung (6) vorgesehen ist, bezüglich der Mikrowellen wechselwirkungsfrei ist und die Temperatur des Bauteils (8, 8') kontaktlos erfaßt, indem der Brennpunkt seiner Meßoptik (13) auf einen in der Erwärmungszone (9, 9') liegenden Meßpunkt an der Oberfläche des Bauteils (8, 8') gerichtet ist.

2. Vorrichtung nach Anspruch 1, **dadurch gekennzeichnet, daß** der wenigstens eine bezüglich der Mikrowellen wechselwirkungsfreie Temperatursensor (11, 11') ein Infrarotsensor ist.

3. Vorrichtung nach Anspruch 1, **dadurch gekennzeichnet, daß** der wenigstens eine bezüglich der Mikrowellen wechselwirkungsfreie Temperatursensor (11, 11') ein glasfaseroptischer Sensor ist.

4. Vorrichtung nach einem der Ansprüche 1 bis 3, **dadurch gekennzeichnet, daß** der Temperatursensor (11, 11') im wesentlichen an der Außenseite der Wandung der Einrichtung zur Abschirmung (6) angeordnet ist.

5. Vorrichtung nach einem der Ansprüche 1 bis 4, **dadurch gekennzeichnet, daß** in der Wandung der Einrichtung zur Abschirmung (6) eine Aufnahmeöffnung (12, 12') für die Meßoptik (13) des Temperatursensors (11, 11') vorgesehen ist.

6. Vorrichtung nach Anspruch 5, **dadurch gekennzeichnet, daß** die Aufnahmeöffnung (12, 12') für die Meßoptik (13) des Temperatursensors (11, 11') von der Außenseite zur Innenseite der Wandung der Einrichtung zur Abschirmung (6) hin konisch verlaufend ausgebildet ist.

7. Vorrichtung nach einem der Ansprüche 5 bis 6, **dadurch gekennzeichnet, daß** im Bereich der Aufnahmeöffnung (12, 12') für den Temperatursensor (11, 11') Absorberzonen vorgesehen sind.

8. Vorrichtung nach einem der Ansprüche 1 bis 7, **dadurch gekennzeichnet, daß** der Temperatursensor (11, 11') und die Steuereinrichtung (15) des Mikrowellengenerators (1) über wenigstens eine Signalleitung (14) miteinander verbunden sind.

9. Vorrichtung nach Anspruch 8, **dadurch gekennzeichnet, daß** in der Steuereinrichtung (15) des Mikrowellengenerators (1) ein Kennfeld mit von dem Signal des Temperatursensors (11, 11') abhängigen Steuerparametem abgelegt ist.

10. Verfahren zum Erwärmen von Bauteilen (8, 8') aus mikrowellenabsorbierendem Kunststoff unter Verwendung einer Vorrichtung gemäß einem der Ansprüche 1 bis 9, **dadurch gekennzeichnet, daß** die Temperatur des Bauteils (8, 8') während der Erwärmung unter Verwendung von wenigstens einem Temperatursensor (11, 11') erfolgt, der im Bereich der Erwärmungszone (9, 9') an der Einrichtung zur Abschirmung (6) vorgesehen ist, bezüglich der Mikrowellen wechselwirkungsfrei ist und die Temperatur kontaktlos erfaßt, indem der Brennpunkt seiner Meßoptik (13) auf einen in der Erwärmungszone (9, 9') liegenden Meßpunkt an der Oberfläche des Bauteils (8, 8') gerichtet ist.

11. Verfahren nach Anspruch 10, **dadurch gekennzeichnet, daß** der Mikrowellengenerator (1) in Abhängigkeit von dem von dem Temperatursensor (11, 11') erfaßten Signal gesteuert wird.

12. Verfahren nach Anspruch 11, **dadurch gekennzeichnet, daß** der Mikrowellengenerator (1) so gesteuert wird, daß die Temperatur der Bauteile (8, 8') in der Erwärmungszone (9, 9') einem vorgegebenen Temperaturverlauf folgt.

## Claims

1. Device for heating components (8, 8') formed from microwave-absorbing plastics material, having
- a microwave generator (1) which generates microwaves of a specific frequency,
- an antenna (4), which has at least one free end (5, 5') to which the microwaves are conducted,
- a shielding device (6) surrounding the antenna (4), there being provided between the free end (5, 5') of the antenna (4) and the shielding device (6) a heating zone (9, 9') in which the components (8, 8') can be heated in a localised manner, and
- at least one temperature sensor (11, 11') by which the temperature of the component (8, 8') can be detected as it is being heated,
**characterised in that** the temperature sensor (11, 11') is provided in the region of the heating zone (9, 9') on the shielding device (6), does not interact with the microwaves and detects the temperature of the component (8, 8') in a non-contact manner by its optical gauge (13) being focused on a measuring point on the surface of the component (8, 8') lying in the heating zone (9, 9').

2. Device according to claim 1, **characterised in that** the at least one temperature sensor (11, 11') which does not interact with the microwaves is an infrared sensor.

3. Device according to claim 1, **characterised in that** the at least one temperature sensor (11, 11') which does not interact with the microwaves is a fibre-optic sensor.

4. Device according to one of claims 1 to 3, **characterised in that** the temperature sensor (11, 11') is disposed substantially on the outer side of the wall of the shielding device (6).

5. Device according to one of claims 1 to 4, **characterised in that** an aperture (12, 12') for receiving the optical gauge (13) of the temperature sensor (11, 11') is provided in the wall of the shielding device (6).

6. Device according to claim 5, **characterised in that** the aperture (12, 12') for receiving the optical gauge (13) of the temperature sensor (11, 11') is configured tapering from the outside to the inside of the wall of the shielding device (6).

7. Device according to one of claims 5 to 6, **characterised in that** absorption zones are provided in the region of the aperture (12, 12') for receiving the temperature sensor (11, 11').

8. Device according to one of claims 1 to 7, **characterised in that** the temperature sensor (11, 11') and the controller (15) of the microwave generator (1) are connected to each other via at least one signal line (14).

9. Device according to claim 8, **characterised in that** performance characteristics with control parameters which are dependent on the signal of the temperature sensor (11, 11') are stored in the controller (15) of the microwave generator (1).

10. Method for heating components (8, 8') formed from microwave-absorbing plastics material, using a device according to one of claims 1 to 9, **characterised in that** the tempcrature of the component (8, 8') during heating ensues using at least one temperature sensor (11, 11') which is provided in the region of the heating zone (9, 9') on the shielding device (6), does not interact with the microwaves and detects the temperature in a non-contact manner by its optical gauge (13) being focused on a measuring point on the surface of the component (8, 8') lying in the heating zone (9, 9').

11. Method according to claim 10, **characterised in that** the microwave generator (1) is controlled in dependence on the signal detected by the temperature sensor (11, 11').

12. Method according to claim 11, **characterised in that** the microwave generator (1) is so controlled that the temperature of the components (8, 8') in the heating zone (9, 9') follows a predetermined course.

## Revendications

1. Dispositif pour chauffer des pièces (8, 8') en matière plastique absorbant les micro-ondes comprenant :
- un générateur de micro-ondes (11) qui génère des hyper-fréquences d'une fréquence déterminée ;
- une antenne (4) ayant au moins une extrémité libre (5, 5') recevant les micro-ondes ;
- une installation entourant l'antenne (4) pour former un écran (6) et entre l'extrémité libre (5, 5') de l'antenne (4) et l'installation formant écran (6) il est prévu une zone de chauffage (9, 9') dans laquelle on chauffe les pièces (8, 8') dans une enceinte limitée ; et
- au moins un capteur de température (11, 11') qui détecte la température de la pièce (8, 8') pendant son chauffage ;
**caractérisé en ce que**
le capteur de température (11, 11') est installé au niveau de la zone de chauffage (9, 9') dans l'installation formant écran (6), et le capteur est insensible aux hyper-fréquences et détecte sans contact la température de la pièce (8, 8'), en dirigeant le foyer de son optique de mesure (13) sur un point de mesure à la surface de la pièce (8, 8') qui se situe dans la zone de chauffage (9, 9').

2. Dispositif selon la revendication 1,
**caractérisée en ce que**
le capteur de température (11, 11') insensible aux hyper-fréquences est un capteur infrarouge.

3. Dispositif selon la revendication 1,
**caractérisé en ce que**
le capteur de température (11, 11') insensible aux hyper-fréquences est un capteur optique à fibre de verre.

4. Dispositif selon l'une des revendications 1 à 3,
**caractérisé en ce que**
le capteur de température (11, 11') est installé essentiellement sur le côté extérieur de la paroi de l'installation formant écran (6).

5. Dispositif selon l'une des revendications 1 à 4,
**caractérisé en ce que**
dans la paroi de l'installation formant écran (6) il est prévu un orifice de réception (12, 12') pour l'optique de mesure (13) du capteur de température (11, 11').

6. Dispositif selon la revendication 5,
**caractérisé en ce que**
l'orifice de réception (12, 12') de l'optique de mesure (13) du capteur de température (11, 11') a une forme conique allant du côté extérieur vers le côté intérieur de la paroi de l'installation formant écran (6).

7. Dispositif selon l'une des revendications 5 et 6,
**caractérisé par**
des zones absorbantes au niveau de l'orifice de réception (12, 12') du capteur de température (11, 11').

8. Dispositif selon l'une des revendications 1 à 7,
**caractérisé en ce que**
le capteur de température (11, 11') et l'installation de commande (15) du générateur hyper-fréquences (1) sont reliés par au moins une ligne de transmission de signaux (14).

9. Dispositif selon la revendication 8,
**caractérisé par**
un champ de caractéristiques avec les paramètres de commande dépendant du signal de capteur de température (11, 11') enregistré dans l'unité de commande (15) du générateur à hyper-fréquences (1).

10. Procédé de chauffage de pièces (8, 8') en matière plastique absorbant les hyper-fréquences en utilisant un dispositif selon l'une des revendications 1 à 9,
**caractérisé en ce que**
on mesure la température de la pièce (8, 8') pendant son chauffage en utilisant au moins un capteur de température (11, 11') installé au niveau de la zone de chauffage (9, 9') sur l'installation formant écran (6), capteur qui est insensible aux hyper-fréquences et détecte la température sans contact, en ayant le foyer de son optique de mesure (13) dirigé vers un point de mesure à la surface de la pièce (8, 8') située dans la zone de chauffage (9, 9').

11. Procédé selon la revendication 10,
**caractérisé en ce que**
le générateur hyper-fréquences (1) est commandé en fonction du signal détecté par le capteur de température (11, 11').

12. Procédé selon la revendication 11,
**caractérisé en ce que**
le générateur hyper-fréquences (1) est commandé pour que la température de la pièce (8, 8') dans la zone de chauffage (9, 9') suive une courbe de température prédéterminée.
